Europäisches Patentamt

European Patent Office

Office européen des brevets

(11) Veröffentlichungsnummer: **0 259 560**
**A2**

(12) **EUROPÄISCHE PATENTANMELDUNG**

(21) Anmeldenummer: **87109776.2**

(22) Anmeldetag: **07.07.87**

(51) Int. Cl.⁴: **G05B 19/06**

(30) Priorität: **14.08.86 DE 3627621**

(43) Veröffentlichungstag der Anmeldung:
**16.03.88 Patentblatt 88/11**

(84) Benannte Vertragsstaaten:
**DE ES FR GB SE**

(71) Anmelder: **NORDISCHER MASCHINENBAU**
**RUD. BAADER GMBH + CO KG**
**Geniner Strasse 249**
**D-2400 Lübeck(DE)**

(72) Erfinder: **Gölnitz, Holger**
**Claudiusring 15a**
**D-2400 Lübeck(DE)**
Erfinder: **Hartmann, Franz**
**Up den Pahl 59**
**D-2060 Bad Oldesloe(DE)**

(54) **Elektronische Steuerungsvorrichtung zum Steuern von Stellgliedern in einer Fischbearbeitungsmaschine.**

㊗ Eine elektronische Steuerungsvorrichtung zum Steuern von Stellgliedern für Werkzeuge und Führungen einer Fischbearbeitungsmaschine soll kompakt bauen, bedienungsfreundlich und für einen störungsfreien Betrieb ausgeführt sein. Zu diesem Zweck ist eine erste Baueinheit (1) als zentraler Rechner, eine Signalverstärker (21) und Anpassungsmittel (22) umfassende zweite Baueinheit (2) sowie eine als Rechner-Peripherieschaltung ausgebildete dritte Baueinheit (3) vorgesehen. Die Baueinheit (3) umfaßt eine Speicher-, Verknüpfungs-und Steuermittel gemeinsam bildende Steuereinheit (33) sowie einen Eingangsteil (31) und einen Ausgangsteil (32), die zur Signalentkopplung, -entstörung und -aufbereitung vorgesehen sind. Insbesondere ist jede Baueinheit in Form einer Platine ausgebildet, wobei die drei Platinen elektrisch und mechanisch miteinander zur Ausbildung einer Konstruktionseinheit verbunden sind.

Fig. 10

## Elektronische Steuerungsvorrichtung zum Steuern von Stellgliedern in einer Fischbearbeitungsmaschine

Die Erfindung betrifft eine elektronische Steuerungsvorrichtung zum Steuern von Stellgliedern für den zeitlichen Einsatz und die Steuerwege von längs eines Fischförderweges einer Fischbearbeitungsmaschine angeordneten Werkzeugen und Führungen mit einem programmierbaren, Fischart-und Maschinendaten speichernden zentralen Rechner (CPU) sowie mit Speicher-, Verknüpfungs-und Steuermitteln für Fischmeßwertdaten, Eingangs-und Ausgangssteuerdaten.

Bei einer gattungsgemäßen bekannten Steuerungsvorrichtung (DE-PS 29 27 583) erreicht man mit einem dieser zugrundeliegenden Verfahren eine relativ geringe Zahl von Funktionselementen, die einen universellen Betrieb einer Fischbearbeitungsmaschine sowie eine zeitlich individuelle Beeinflussung der Stellglieder unter Ermittlung von genauen Steuerwerten grundsätzlich erlauben. In der Praxis hat sich jedoch herausgestellt, daß beim Fischmaschinenbetrieb auftretende Umgebungseinflüsse, wie z.B. Vibration und durch Leistungsaggregate hervorgerufene Spannungs-und Stromstöße sowie Feuchtigkeits-und Temperatureinflüsse zu erheblichen Störungen und sogar Betriebsausfall führen. Um diesen Nachteilen zu begegnen, sind empfindlich arbeitende und reagierende elektronische Baugruppen aus dem Bereich der Fischmaschine entfernt worden, wodurch insbesondere bei einem Hochgeschwindigkeitsbetrieb, z.B. für pinbonefreien Schnitt, Störanfälligkeiten nicht in ausreichendem Maß beseitigt werden können. Durch Verlegung sowie relativ weit beabstandete Anordnung von Baugruppen untereinander werden zudem Wartung, Bedienungsfreundlichkeit, universelle Einsatz-und Betriebsmöglichkeit, Selbstüberwachung, schnelle, umfassende und übersichtliche Betriebsanzeige sowie auch kostengünstige Herstellung und Bauweise in erheblichem Maß beeinträchtigt bzw. ausgeschlossen.

Probleme der geschilderten Art treten schon bei einer nicht universell arbeitenden, im übrigen aufwendigen sowie nur eingeschränkt verwendbaren elektronischen Fischmaschinensteuerung auf (DE-OS 27 47 386). Dort werden einerseits Werkzeugstellglieder betreibende Leistungsverstärker oder Leistungsteile zusammen mit einem dadurch störanfällig betriebenen Rechner in einer Steuereinheit untergebracht, und diese wird andererseits nach Möglichkeit von Störquellen wie Fischschneidbereich und Förderer entfernt angeordnet.

Demgegenüber liegt der Erfindung im Hinblick auf die Bewältigung von fischmaschinen-spezifischen Problemen die Aufgabe zugrunde, für die Steuerung von Werkzeugen und Führungen in einer Fischbearbeitungsmaschine eine elektronische Steuerungsvorrichtung so anzupassen und auszubilden, daß sie bei kompakter und übersichtlicher Bauweise insbesondere in einer Fischmaschine installierbar sowie bei universeller und zuverlässiger Einsetz-, Einstellbarkeit und Datenbe-und Verarbeitungsmöglichkeit bedienungsfreundlich, übersichtlich und einfach zu warten und zu handhaben ist, wobei sie gegen mechanische Betriebserschütterungen sowie gegen elektrische, beim Betrieb von Maschinenstellgliedern oder Leistungsteilen anfallende Strom-oder Spannungsgrößen, -stöße oder -überlagerungen gesichert ist und Rechneroperationen sowie Steuerablaufvorgänge überwacht und auch bei hoher Betriebsgeschwindigkeit störungsfrei ausgeführt werden.

Diese Aufgabe wird bei einer elektronischen Steuerungsvorrichtung der eingangs genannten Art dadurch gelöst, daß die Vorrichtung eine erste, den zentralen Rechner bildende Baueinheit, eine mit dieser verbundene, Signalverstärker und Anpassungsmittel umfassende zweite Baueinheit sowie eine als Peripherieschaltung für den zentralen Rechner ausgebildete dritte Baueinheit umfaßt, die eine die Speicher-, Verknüpfungs-und Steuermittel gemeinsam bildende, mit der zweiten Baueinheit verbundene Steuereinheit sowie, jeweils mit letzterer verbunden und zur Signalentkopplung, -entstörung und -aufbereitung vorgesehen, einen Eingangsteil und einen Ausgangsteil umfaßt. Mit der erfindungsgemäßen Ausbildung, Anordnung und Zuordnung von selbständigen Baueinheiten wird eine für sich kompakt bauende elektronische Steuerungsvorrichtung geschaffen, die als solche infolge der Konzentration und spezifischen Zusammenschaltung von Funktionsbereichen unter Ausnutzung der ihr immanenten elektronischen Möglichkeiten, wie z.B. große Betriebsgeschwindigkeit, Genauigkeit und universelle Einstellbarkeit, als leicht montierbare Gesamt-Funktionseinheit insbesondere innerhalb einer gesteuerten Fischmaschine, unterbringbar ist, wobei die Bildung, Abgrenzung, angepaßte Zusammenschaltung und räumliche Zuordnung von Funktionsbereichen zuverlässig Abschirmung und Sicherheit gegen elektrische, mechanische sowie fischmaschinenbedingte Umgebungseinflüsse sowie Bedienungs-, Wartungsfreundlichkeit und übersichtliche, an einer Einheit anzeigbare Überwachungsmöglichkeiten gewährleisten.

Aufgrund der kompakten Vorrichtung, die unmittelbar an oder in der Fischmaschine angeordnet sein kann, lassen sich sämtliche Betriebs-und Signalzustände sowie korrekte Funktionsabläufe auch von ungeschultem Personal auf einen Blick überwachen, indem der Eingangsteil und der Ausgangsteil optische Anzeigeelemente, vorzugsweise Leuchtdioden, für alle die Fischmeßwertdaten sowie Eingangs-und Ausgangssteuerdaten repräsentierenden Signale umfassen. Mit solchen Anzeigen wird der Betrieb von Speicher-und Fischmaschinen-Steuerungsbereichen lokalisierend überwachbar. Dabei ist es zur ständigen Kontrolle eines Meßvorgangs am Fisch besonders zweckmäßig, daß der Ausgangsteil eine Fischgrößenanzeigeschaltung mit einem Register, einer Dekodierstufe und einer mehrstelligen Segmentanzeige für die Fischgröße umfaßt.

Störanfälligkeit der elektronischen Steuerungsvorrichtung kann zusätzlich zu der Bereichsaufteilung der Schaltungsteile und zu den funktionsselbständigen, an der äußeren Peripherie der Einheit liegenden Eingangs-und Ausgangsteilen dadurch beseitigt werden, daß diese Wandler oder Glieder zur galvanischen Entkopplung, insbesondere Optokoppler, umfassen. Deren Kopplungszeiten können einfach an die Fischmeßwertzeiten und Impulssignalgeschwindigkeiten angepaßt werden, und sie weisen eine die Beseitigung von Störungen gewährleistende Richt-bzw. Filtercharakteristik auf. Die elektronische Funktionsweise kann auf besonders vorteilhafte Weise von Umgebungseinflüssen ungestört dadurch gewährleistet werden, daß der Eingangsteil zusätzlich mit Eingangsschaltungen zur Unterdrückung von Störungen sowie zur Stabilisierung von Eingangssignalen versehen wird. Besonders zweckmäßig ist es, daß eine dem Fischweg zugeordnete Fischtransport-Eingangsimpulsschaltung des Eingangsteils eine Signalaufbereitungs-und Impulsformerschaltung umfaßt.

Zur Erzeugung und Übertragung von Signalen zwischen Steuervorrichtung und Leistungsteilen wird eine besonders vorteilhafte Anpassung dadurch erreicht, daß der Ausgangsteil zum Hervorbringen und zur Abgabe von Schrittmotor-Stellimpulssignalen eine Schrittmotor-Stellimpulsschaltung aufweist, die ein Eingangsgatter, insbesondere ein invertierendes Exklusiv-OR-Gatter, einen Inverter, eine Zeitstufe sowie eine Gegentaktendstufe umfaßt.

Um zur Positionierung von Werkzeugen erforderliche Steuersignale besonders störsicher an Schrittmotor-Stellwerke bzw. -Verstärker geben zu können, kann der Ausgangsteil zur Abgabe eines Entregungssignals, eines Drehrichtungssignals sowie eines Rücksetz-Signals für einen Schrittmotor eine Schaltung aufweisen, die jeweils eine Signalaufbereitungsschaltung sowie eine Gegentaktendstufe umfaßt. Damit sind niederohmige Anpassung sowie Verarbeitung von Signalpegeln nur bestimmter Größe in der Endstufe erreicht.

In Weiterbildung erhält man eine zusätzliche Sicherung gegen Überlastung von Endstufen dadurch, daß diese mit thermischen Überwachungsmitteln versehen werden.

Eine besonders vorteilhafte Ausgestaltung der Erfindung besteht darin, daß in dem Ausgangsteil der Peripherieschaltung eine Fischtransport-und Werkzeugantriebssteuerung mit einer Ausgangsstufe vorgesehen wird, die zur Relaissteuerung geeignete Spannungen und Ströme hervorbringt und vorzugsweise elektronische Schalter in Form von Darlington-Transistoren umfaßt. Dabei ist es besonders zweckmäßig, die Ausgangsstufe durch eine Strombegrenzungsschaltung gegen Überlastung zu sichern.

Um die Störsicherheit der Vorrichtung weiter zu erhöhen, ist es besonder zweckmäßig, zu ihrer Versorgung Schaltungen zum Hervorbringen von vier getrennten Versorgungsspannungen vorzusehen. Damit erfolgt eine zusätzliche Entkopplung zwischen Rechner und Steuereinheit sowie zwischen der Fischmaschine bzw. deren Leistungsteilen oder Stellgliedern und den mit Relais verbundenen Eingangs-und Ausgangsteilen der Peripherieschaltung.

Die erfindungsgemäße Steuereinheit der Peripherieschaltung ermöglicht in Weiterbildung der Erfindung aufgrund ihrer Anordnung und Funktionsweise, daß sie mit einer Vorwahl-/Stellungsschaltereinheit verbunden wird. So kann ohne Unterbrechung des Fischmaschinenbetriebs und damit ohne Zeitausfall, vorzugsweise unmittelbar durch Anordnung der Steuerungsvorrichtung an der Fischmaschine, eine einfache Einstellung zur Anpassung an z.B. Fischart, -qualität und Bearbeitungsvorgänge, wie z.B. Entgräten, Filetieren und Köpfen, erfolgen. Diese elektronischen Einstellungsmöglichkeiten ersetzen mechanische Umrüstungen wie z.B. den Austausch von Steuerkurven, so daß keine mechanischen Verschleißteile vorhanden sind und die elektronische (Vor-) Einstellung verschleißfrei arbeitet.

Im Hinblick auf eine besonders große Verknüpfungs-, Speicher-und Signal-Verarbeitungstiefe, d.h. zur Erzielung einer großen Anzahl von Steuervorgängen für die Fischbearbeitung und zur besonderen Gewährleistung von den Rechner entlastenden Steuerausführungen, besteht eine besonders vorteilhafte Ausgestaltung der Erfindung darin, daß die Steuereinheit vier Speicher-und Verknüpfungsbauelemente umfaßt, wobei das erste Element mit einem Eingang für vorrangige Bearbeitung versehen ist, und Schrittmotor-Drehrichtungs-, Entregungs-und Zurücksetzsignalen entsprechende Steuersignale speichert und hervorbringt, das zweite Element serielle Anzeigedaten sowie Messermotor-und Fischtransportsignalen entsprechende Steuersignale speichert und hervorbringt, das dritte Element Impulsfolgewerte für einen Schrittmotor speichert und hervorbringt und das vierte Element zur Abfrage und Ansteuerung einer Vorwahl-/ und Stellungsschaltereinheit vorgesehen ist. Das erste Speicher-/Verknüpfungselement erkennt Signale ihrer Bedeutung nach, so daß z. B. eine gerade laufende Bearbeitung von die Fischposition abfragenden Signalen oder Maschinentypsignalen unterbrochen wird und ein zwischendurch gemeldetes Fischtransportimpulssignal vorrangig behandelt wird bzw. nur dem Fischtransport entsprechende Signale durch das erste Element bearbeitet werden. Durch die Unterteilung der Steuereinheit in spezifische Funktionsgruppen für bestimmte Signale wird auf kleinem Raum eine hohe Verknüpfungs-, Speicher-und Verarbeitungstiefe erreicht, so daß umfangreiche den CPU-Rechner entlastende Steuerausführungen erfolgen können, wobei die Verbindung und Verschaltung der Elemente mit den Anpassungsmitteln sowie mit den Eingangs und Ausgangsteilen übersichtlich und kompakt sind.

Um sich über eine korrekte Funktion der Steuerungsvorrichtung zu vergewissern, d.h. um Datenflüsse nach zu vollziehen und Ablaufvorgänge zu prüfen, ist es besonders vorteilhaft, daß die Peripherischaltung eine zwischen die Steuereinheit und die Anpassungsmittel geschaltete, Prüfprogramme speichernde Speichereinrichtung umfaßt. Diese kann auf einfache Weise vorgesehen werden und ist wie der den Rechner entlastende Steuerbereich vor Störungen gesichert.

Eine besonders vorteilhafte Ausgestaltung der Erfindung besteht darin, daß die Vorrichtung als Konstruktionseinheit zum Einsetzen in und/oder Anschluß an eine Fischbearbeitungsmaschine mit drei elektrisch und mechanisch verbundenen Platinen ausgebildet ist, wobei eine erste Platine die zweite Baueinheit, eine zweite Platine die erste Baueinheit und eine dritte Platine die dritte Baueinheit trägt und die Platinen in dieser Reihenfolge miteinander verbunden, insbesondere im Stapel angeordnet sind. Obwohl die Steuerungsvorrichtung als kompakt bauendes Aggregat ausgeführt ist, sind auf diese Weise ihre einzelnen, gezielt für spezifische Funktionen ausgelegten Baueinheiten auf besonders zweckmäßige Weise auf engem Raum räumlich voneinander getrennt angeordnet, so daß innerhalb der Vorrichtung elektrische Überlagerungen, d.h. unerwünschte Rückwirkungen vermieden sind. Zudem ergibt sich ein besonders einfach zu montierender, zu handhabender und mechanisch stabiler, gegen Erschüt terungen gesicherter Bausatz.

Ausführungsbeispiele sowie weitere Zweckmäßigkeiten und Vorteile der Erfindung werden im folgenden anhand der schematischen Zeichnung näher erläutert. Es zeigen

Fig. 1 ein Blockdiagramm einer erfindungsgemäßen Vorrichtung,

Fig. 2 eine Übersicht über die Beschaltung einer erfindungsgemäßen Vorrichtung,

Fig. 3a bis 3o Signaldiagramme für Steuersignale sowie Eingangs-und Ausgangssignale einer erfindungsgemäßen Vorrichtung,

Fig. 4 eine Steuerschaltung für Eingangsparametersignale,

Fig. 5 eine Fischweg-Impulserzeugungsschaltung,

Fig. 6 eine Fischmeßwert-Eingabeschaltung,

Fig. 7 eine SM-Stellimpulserzeugungsschaltung,

Fig. 8 eine Betriebszustand-Steuerungsschaltung für Schrittmotor und Fischtransport,

Fig. 9 eine Steuerungsschaltung zum Werkzeugantrieb und/oder Fischtransport sowie

Fig.10 eine Platinen-Konstruktionseinheit einer ererfindungsgemäßen Vorrichtung in Explosionsdarstellung.

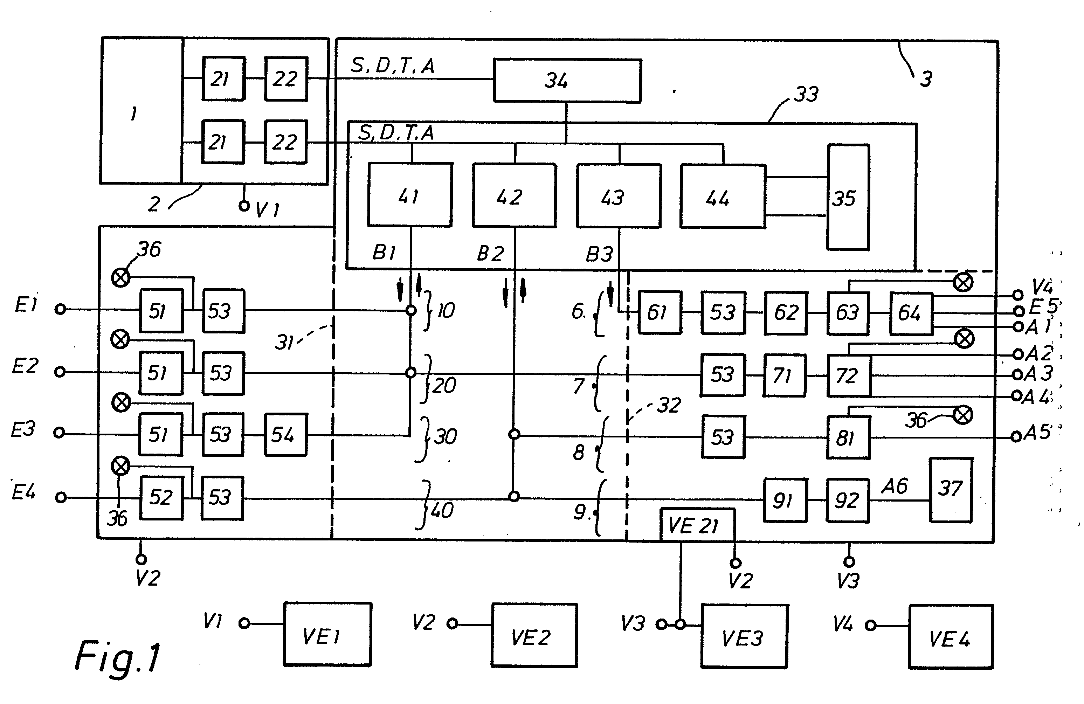

Eine Steuerungsvorrichtung in Fig. 1 umfaßt einen eine CPU-Baueinheit, d.h. eine zentrale Be-und Verarbeitungseinheit, bildenden Rechner 1, eine einen Signalverstärker 21 und eine Anpassungsschaltung 22 aufweisende Baueinheit 2 sowie eine Baueinheit 3 als Peripherieschaltung, die über die Baueinheit 2 an den Rechner 1 geschaltet ist. Die Peripherieschaltung 3 umfaßt eine Steuereinheit 33 mit einer zu ihr parallel geschalteten Prüfprogramm-Speichereinrichtung 34, einen Eingangsteil 31 sowie einen Ausgangsteil 32. Die Steuereinheit 33 ist mit Speicher-und Verknüpfungsbauelementen 41, 42, 43 und 44 aufgebaut. Der Eingangsteil 31 ist mit Steuerparameter-Eingangsschaltungen 10 und 20, einer Eingangsimpuls-Erzeugungsschaltung 30 sowie einer Fischmeßwert-Eingangsschaltung 40 ausgestattet. Der Ausgangsteil 32 umfaßt eine Schrittmotor-(SM) Stellimpulserzeugungsschaltung 6, eine SM-Zustandssteuerungsschaltung 7, eine Fischtransport-und Werkzeugantriebsschaltung 8 und eine Anzeigeschaltung 9.

Die Baueinheiten bzw. Schaltungsteile sind untereinander über gesteuerten Datentransport und -austausch gewährleistende Datenbusleitungen miteinander verbunden. Insbesondere sind Speicher oder Register der Bauelemente 41 bis 44 und 34 mit den Anpassungsschaltungen 22 über Steuerleitungen S zum Aktivieren des gerade zum Betrieb erforderlichen Bausteines, zur Bestimmung des Datenflusses zum Rechner oder zur Herbeiführung eines Ausgangszustandes eines Bauelements, über Daten (z.B. SM-Impulsabstand, Meßwerte, Anzeigewerte, Steuerwerte) gebende und lesende Datenleitungen D, über Arbeits-oder Synchronisiertakt gebende Taktleitungen T, über Adreßleitungen A sowie über Datenleitungen für Prüfprogramme verbunden. Die Speicher-und Verknüpfungselemente 41, 42, 43 und 44 sind also über Lese-/Schreib-(R/W-)Leitungen in Daten oder Signale einlesende oder abgebende Arbeitsweise steuerbar, so daß Eingangs-/Ausgangstore (Ports) der Bauelemente sämtlich oder einzeln nach Bedarf aktivierbar sind. Entsprechend sind Leitungen B1, B2, B3 mit Richtungspfeilen versehen, die den Datenfluß repräsentieren.

Die Vorrichtung wird mit bestimmten, den Eingangsschaltungen 10, 20, 30, 40 und der Ausgangsschaltung 6 zugeordneten Signalgruppen E1, E2, E3, E4, E5 beaufschlagt und gesteuert. Die Ausgangsschaltungen 6, 7, 8 geben Signalgruppen A1, A2, A3, A4 und A5 ab.

Die Schaltungen 10, 20, 30, 40 bzw. 6, 7 und 8 der Eingangs-und Ausgangsteile 31 bzw. 32 sind mit Optokoppler aufweisenden Schaltungen 53 ausgestattet. Diese Signalübertrager dienen einer galvanischen Trennung zwischen elektrisch empfindlichen Steuerbereichen (Rechner-/Speichersteuerbereich) und mit einer Fischmaschine in Verbindung stehenden Schaltungen oder Signalgebern (Fischmaschinensteuerbereich). Die Koppler arbeiten nach einem Sender-Empfängerprinzip, so daß sie eine Richt-bzw. Filtercharakteristik aufweisen, und sie sind an die Signal bzw. Impulsgeschwindigkeiten angepaßt. So gewährleisten sie eine galvanische Trennung und Anpassung zwischen Signalpegeln, z.B. 5 Volt für den Speichersteuerbereich und 24 Volt für an der Steuerungsvorrichtung anliegenden oder von ihr abgegebenen Steuersignalen, so daß insbesondere die Steuereinheit 33 von Störungen freigehalten wird, aber auch umgekehrt Störungen innerhalb des Innenbereichs der Steuerungsvorrichtung nicht in deren Außenbereiche übertragen werden.

In Signalleitungen des Eingangs-und Ausgangsteils 31 bzw. 32 sind Leuchtdioden 36 als optische Anzeigeelemente vorgesehen, um das Auftreten, den Fluß und die Reihenfolge sämtlicher Signale an der Steuerungsvorrichtung optisch und einfach überwachen zu können.

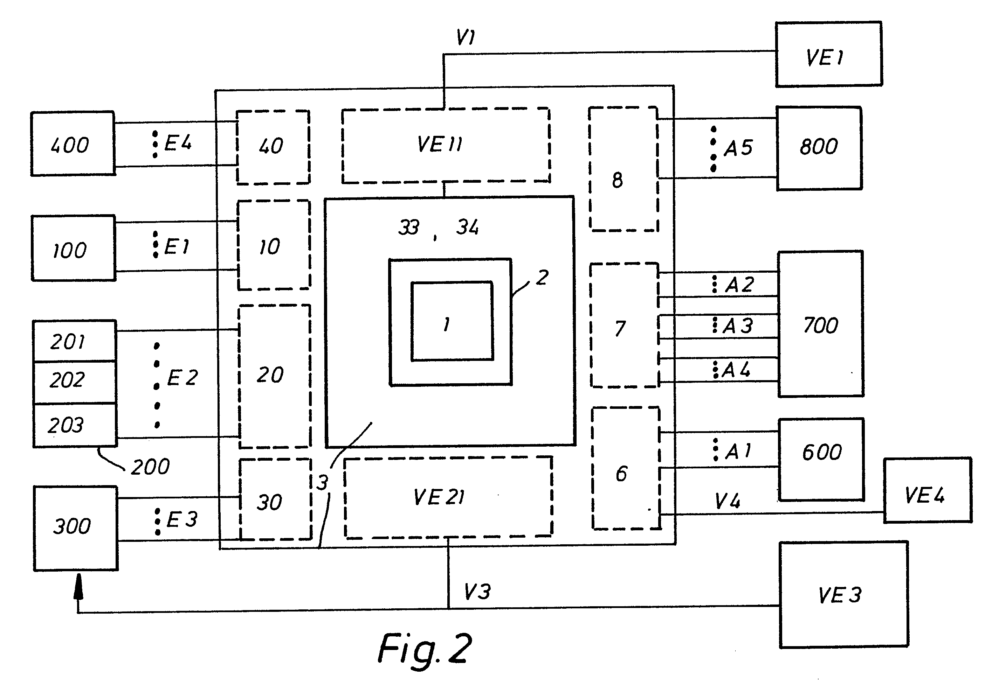

Aus Fig. 2 erkennt man die Beschaltung einer erfindungsgemäß aufgebauten, störungssicheren Steuerungsvorrichtung mit an oder in einer Fischbearbeitungsmaschine vorgesehenen Signalgebern oder -sensoren 200, 300, 400 und SM-Leistungsteilen 600, 700 bzw. SM-Relais 800. Für entsprechende Bauteile sind Bezugszeichen gemäß Fig. 1 verwendet worden.

Weitere Einzelheiten und Merkmale der in der Zeichnung dargestellten erfindungsgemäßen Steuerungsvorrichtung gehen aus der nachstehenden Funktionsbeschreibung der Steuerung hervor.

Ein Winkelkodierer 400 bringt ein sechskanaliges Bit-Muster E4 hervor, das einer fischspezifischen, d.h. fischabhängigen Größe, z.B. der Fischdicke, entspricht. Dieses Signalmuster E4 gelangt über eine Stabilisierungsund Unterdrückungs-oder Selektierungsschaltung 52 und über die der galvanisch trennenden Übertragung dienenden Koppler 53 an das Speicher-und Verknüpfungsbauelement 42 der Steuereinheit 33.

Fischdicken-Signale werden dem Rechner 1 nach Maßgabe von Eingangs-Steuersignalen E2 zugeführt, mit denen die Eingangsschaltung 20 beaufschlagt wird. Die Signale E2 umfassen ein Auslösesignal eines Muldentaktschalters 201, der einen definierten Meßzeitpunkt bestimmt, ein Abfragesignal eines eine bestimmte Fischposition abrufenden Schalters 202, einen Schalter 203 für ein Freigabe-oder Startsignal, demzufolge ein Fischdickensignal von dem Rechner 1 akzeptiert wird, sowie Maschinentyp-Kontroll-und Betriebssignale, durch deren Abfrage insbesondere bestimmte, den Maschinentyp bestimmende Werkzeuge aktiviert werden. Die Steuerungsvorrichtung wird über die Eingangsschaltung 10 mit von Nullagemeldeschaltern, d.h. von Signalgebern 100 für Werkzeug-Betriebszustände, gelieferten SM-Nullagenüberwachungssignalen E1 angesteuert. Eine Fischtransportkontrolle erfolgt über von einem Taktgeber 300 erzeugte transportsynchrone Impulssignale E3, die der Eingangsschaltung 30 zugeführt sind. Diese umfaßt eine Impulsformer-Schaltung 54, mit der die Signale so aufbereitet werden, daß nur für den Fischtransport relevante Signale weitergegeben werden. Ausgänge der Schaltungen 10, 20 und 30 sind mit dem Speicher-und Verknüpfungsbauelement 41 verbunden. Zur Stabilisierung und Unterdrückung von Störanteilen umfassen die Eingangsschaltungen 10, 20 und 30 Stabilisierungs-und Unterdrückungs-oder Selektierungsschaltungen 51.

Nach Maßgabe der Eingangssteuersignale werden von dem Rechner 1 Daten für Stellimpulse ermittelt und nach Speicherung in einem Register und Leerzählen eines Registers des Speicher-und Verknüpfungsbauelements 43 der Steuereinheit 33 an die SM-Stellimpulserzeugungsschaltung 6 gegeben. Diese umfaßt ein Eingangsgatter 61 zur Impulserzeugung bei jedem Signal-Flankenwechsel, mit dem die Stellgeschwindigkeit der Fischbearbeitungswerkzeuge bestimmt ist, einen der Signalaufbereitung dienenden invertierenden Treiber 62, eine Zeitstufe 63, die einen Impuls mit einer für einen SM-Antrieb erforderlichen Impulslänge abgibt, sowie eine Gegentaktendstufe 64 zur Abgabe von Stellimpulssignalen A1. Zur Unfallverhütung wird beim Öffnen von Maschinenschutzgittern od.dgl. die Stufe 64 über ein in Fig. 1 nicht dargestelltes elektrisches Bauteil mit einem Signal E5 angesteuert, um sie zu blockieren, so daß keine Stellimpulse A1 mehr an die SM-Leistungsteile 600 gegeben werden.

Zur Positionierung von Fischmaschinenwerkzeugen werden in dem Speicher-und Verknüpfungsbauelement 41 Schritt motor-(SM-)Steuerdaten für die Drehrichtung, das Entregen, d.h. die Beseitigung eines Haltemoments, und das Zurücksetzen gespeichert und stationär jeweils über galvanische Trennglieder 53 der Schaltung 7 in den sich anschließenden Maschinensteuerungsbereich gekoppelt. Dort sorgt eine Schaltung 71 für eine Signalaufbereitung, so daß nur Signale eines bestimmten Pegels, der insbesondere größer als 8 Volt ist, von einer Gegentaktendstufe 72 verarbeitet und damit störsicher sowie niederohmig an die SM-Stellwerke, d.h. Leistungsverstärker 700, gegeben werden. Eine Störung in den Stellwerkzeugen wird durch zugeordnete SM-Nullagenüberwachungssignale E1 gemeldet und von der Steuerung berücksichtigt. So werden parallel zu den SM-Stellimpulsen A1 die SM-Drehrichtung bestimmende Signale A3 abgegeben. Ein SM-Drehrichtungssignal A3 veranlaßt ein SM-Stellwerk 700, mehrere Versuche auszuführen, um die Ausgangsposition zu erreichen. Währenddessen wird der Fischtransport gestoppt. Wenn ein Schrittmotor seine gewünschte Ausgangsposition nicht erreicht, sorgen Steuerdaten des Speicher-und Verknüpfungsbauelementes 41 dafür, daß das gestörte Werkzeug mit einem SM-Entregungssignal A2 entregt wird, es also kein Haltemoment mehr aufweist, während ebenfalls ein Signal A5 über ein Relais 800 den Werkzeugmotor infolge eines Steuersignals des Speicher-und Ver-knüpfungsbauelements 42, das die Ausgangs-schaltung 8 ansteuert, abschaltet. SM-Reset-Signale A4 sorgen stets für einen einwandfreien Schaltzustand in den SM-Leistungsteilen, so daß insbesondere nach einer Netzeinschaltung keine unerwünschten entregten Zustände auftreten.

Die Ausgangsschaltung 8 ist als Fischtransport-und Werkzeugantriebssteuerungsschaltung ausgebildet. Diese umfaßt eine Ausgangsstufe 81 mit insbesondere in Form von Darlington-Transistoren ausgebildeten elektronischen Schaltern. Von dem Speicher-und Verknüpfungsbauelement 42 werden über galvanische Trennstellen 53 Steuerdaten an die Ausgangsstufe 81 gegeben, so daß diese Maschinenbetriebs-Steuersignale A5, insbesondere ein Messermotor-Signal sowie ein Fischtransport-Signal, hervorbringt. Ein solches Signal weist insbesondere einen Spannungspegel von 24 Volt auf und läßt einen Strom zu, der geeignet ist, ein Stellglied, z.B. ein Relais 800, so anzusteuern, daß auf einen entsprechenden Steuerbefehl hin der Fischtransport und/oder der Messermotor und damit der Schneidvorgang gestoppt werden.

Zur ständigen Kontrolle eines Meß-und Bearbeitungsvorganges wird ein von einem Fisch gewonnener, insbesondere der Fischdicke entsprechender Wert von dem CPU-Rechner 1 über das Speicher-und Verknüpfungsbauelement 42 in serieller Form in Register 91 der Ausgangsschaltung 9 gegeben, die als Fischgrößenanzeigeschaltung ausgebildet ist und eine Dekodierstufe 92 sowie eine mehrstellige, z.B. eine 7-Segmente umfassende Anzeige 37 umfaßt. Die Register 91 speichern die seriellen Daten und geben sie gleichzeitig parallel stationär an nachgeschaltete Dekodierstufen 92 ab, die insbesondere aus einem 4-Bit-Ziffernsignal einen 7-er-Kode A6 erzeugen, der zur Ansteuerung des 7-Segment-Displays 37 dient.

Zur Optimierung der Fischbearbeitung ist die Steuerungsvorrichtung mit mehreren Vorwahlschaltern 35 ausgestattet, mit denen sich eine bestimmte Fisch-Kopflänge oder bestimmte Schnittvorgänge, z.B. ein Flankenschnitt, sowie andere Bearbeitungsparameter vorgeben lassen. Die Stellungswerte dieser Schalter 35 werden während einer Fischbearbeitung ständig berücksichtigt, d.h., daß eine Veränderung der Schalterstellung sofort erkannt und gelesen und damit für die Positionierung der Bearbeitungswerkzeuge berücksichtigt wird. Die Schalter 35 sind Bestandteil der Steuereinheit 33, wobei sie von dem Speicher-und Verknüpfungsbauelement 44 direkt angesteuert und gelesen werden, indem jedem Schalter ein separates Steuersignal zugeordnet ist, während Lesesignale von jedem Schalter als 4-Bit-Signalmuster - über in Fig. 1 nicht dargestellte Dioden verknüpft - auf vier gemeinsame Leseeingänge der Baueinheit 44 geführt sind.

In Figuren 1 und 2 erkennt man die Beschaltung der Steuerungsvorrichtung sowie der Signalgeber und Leistungsteile mit besonders vorgesehenen, dem Aufbau der Steuerungsvorrichtung speziell zugeordneten und angepaßten Versorgungseinheiten VE 1, VE 2, VE 3 und VE 4. Die Einheit VE 1 versorgt die CPU-Rechner-Baueinheit 1, die Baueinheit 2 sowie die Steuereinheit 33 und die Prüfprogramm-Speichereinrichtung 34 mit einer Spannung V1 = 5V. Dabei ist die Einheit VE 1 an ein in der Peripherieschaltung 3 vorgesehenes Entstörfilter VE 11 angeschlossen. Die Außenbereiche der Peripherieschaltung 3, d.h. die mit den galvanischen Trenngliedern 53 vom inneren elektronischen Steuerungsbereich abgetrennten Eingangs-und Ausgangsschaltungen, d.h. die Ma-schinensteuerbereiche, werden mit der Versorgun-gseinheit VE 2, die eine Spannung V2 = 5 V abgibt, sowie mit der Versorgungseinheit VE 3, die eine Spannung V3 = 24 V abgibt, betrieben. Anstelle der Schaltung VE 2 kann innerhalb der Peripherieschaltung 3 eine mit der Einheit VE 3 verbundene und in dem Peripherieschaltungsteil 3 untergebrachte Spannungswandlungs-und Kurzschlußabsicherungsschaltung VE 21 zum Hervorbringen der Spannung V2 vorgesehen sein. Mit der Versorgungseinheit VE 3 werden auch die Signalgeber 200, 300 und 400 gespeist. Zur Versorgung der Gegentaktendstufe 64 der SM-Stellimpulserzeugungsschaltung 6 ist die 24 Volt liefernde Versorgungseinheit VE 4 vorgesehen.

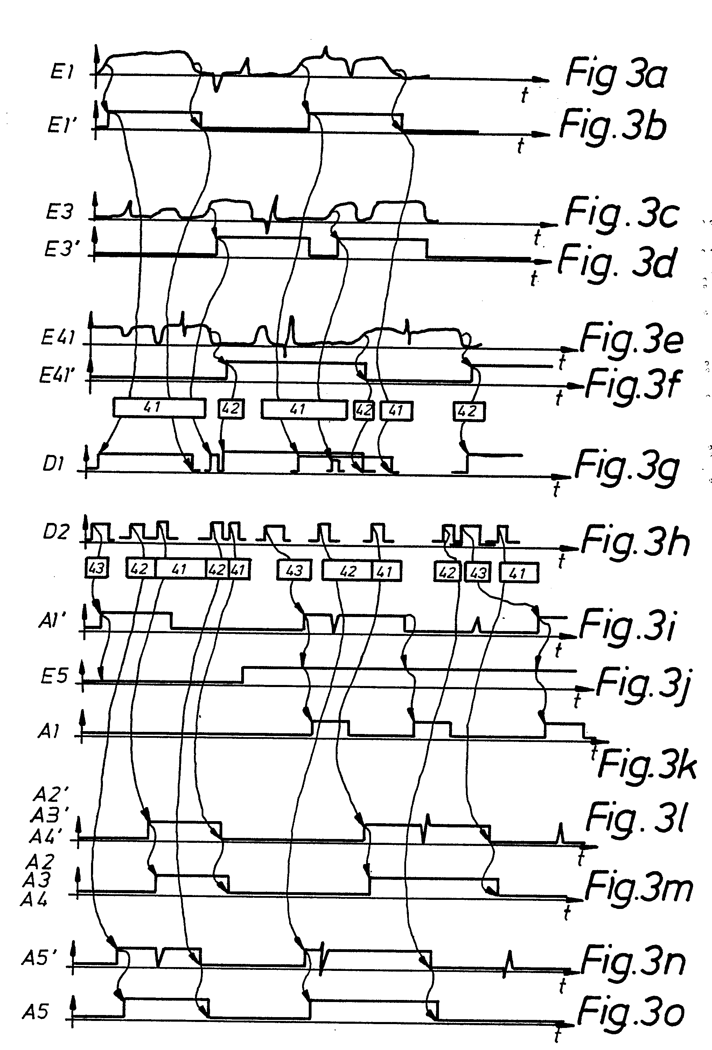

In Fig. 3a bis 3o sind Signale bzw. Werte von Eingangs-und Ausgangsgrößen der Schaltungen über der Zeit aufge tragen.

Durch einen Schaltkreis der Schaltung 10 wird ein gestörtes SM-Nullagenüberwachungssignal E1 (Fig. 3a) in ein stabilisiertes und entstörtes Ausgangssignal E1' (Fig. 3b) umgewandelt. Entsprechende Signalverhältnisse bzw. Signalabläufe liegen bei die Eingangsschaltung 20 steuernden Signalen E2 vor. Ein gestörtes Fischtransportimpulssignal E3 (Fig. 3c) erhält durch die Wirkung eines Schaltkreises der Schaltung 30 die Form E3' (Fig. 3d). Ein gestörtes Fisch-Meßwertsignal E41 (Fig. 3e) wird durch einen Schaltungsabschnitt der Schaltung 40 in ein stabilisiertes und aufbereitetes Signal E41'(Fig. 3f) umgeformt. Infolge einer Steuerausführung durch das Verknüpfungsbauelement 41 für die Signale E1'sowie E3'sowie infolge einer Steuerausführung durch das Verknüpfungsbauelement 42 für das Signal E41'resultiert am Eingang der Baueinheit 2 ein paralleler Datenbus D1(Fig. 3g). Dieser führt infolge der Rechen-und Verknüpfungsoperationen der Steuerungsvorrichtung zu einem parallelen Datenbus D2 (Fig. 3h) am Ausgang der Baueinheit 2. Weitere Steuerabläufe in der Steuereinheit 33 bewirken, daß das Verknüpfungsbauelement 43 ein SM-Steuersignal A1' (Fig. 3i) abgibt, das durch einen Schaltungsabschnitt der SM-Stellimpulserzeugungsschaltung 6 entstört und aufbereitet wird, so daß man SM-Stellimpulse A1 (Fig. 3k) zur Steuerung der SM-Leistungsteile erhält. Man erkennt, daß keine Abgabe von SM-Stellimpulssignalen A1 erfolgt, solange das SM-Steuersignal E5 (Fig. 3j) einen Nullpegel einnimmt. Aus dem Verknüpfungsbauelement 41 wird ein Steuersignal A2', A3' bzw. A4' (Fig. 3l) ausgelesen, das jeweils nach Entstörung, Stabilisierung und Aufbereitung durch einen zugeordneten Schaltkreis der Ausgangsschaltung 7 zu einem Entregungssignal A2, einem Drehrichtungssignal A3 bzw. einem Zurücksetz-Signal A4 für einen Schrittmotor führt (Fig. 3m). Aus dem Verknüpfungsbauelement 42 wird ein Maschinenbetriebs-Steuersignal A5' (Fig. 3n) zur Steuerung des Messermotors und/oder des Fischtransports ausgelesen, das in einem zugeordneten Schaltungsteil der Fischtransport-und Werkzeugantriebssteuerschaltung 8 ebenfalls entstört und aufbereitet wird, so daß die Ausgangsschaltung 8 Signale A5 (Fig. 3o) abgibt. In den Signaldiagrammen ist die Signaländerung infolge eines Flankenanstiegs bzw. Flankenabfalls bzw. bei einem bestimmten Signalpegel mit zwischen den Diagrammen verlaufenden Bezugslinien dargestellt, die jeweils den Zustand eines resultierenden Signals dem steuernden Signal zuordnen, wobei die Steuerung durch die Verknüpfungsbauelemente 41, 42 und 43 mit entsprechenden Kästchen schematisch dargestellt ist.

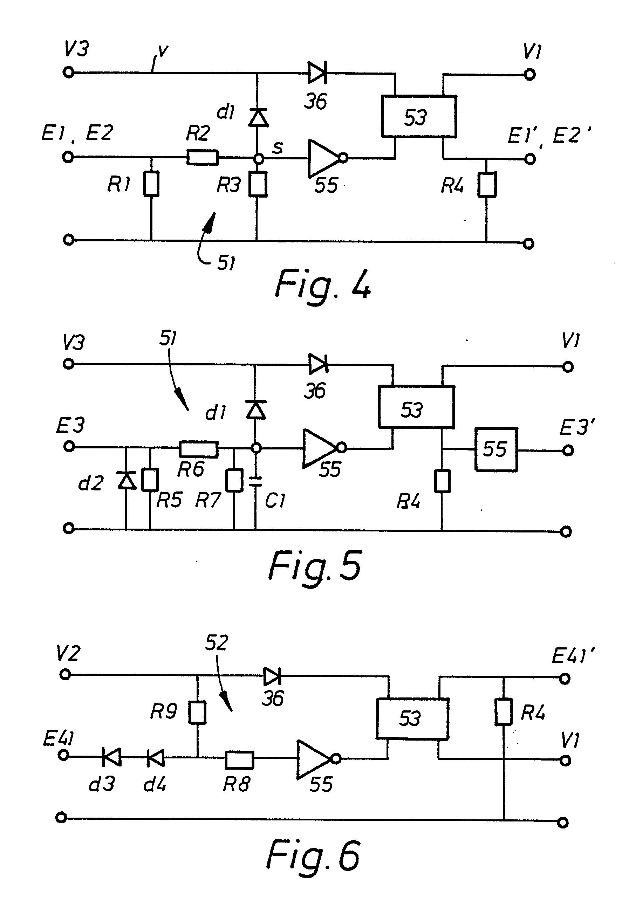

In Fig. 4 ist eine für die Zwecke der Erfindung geeignete Schaltung dargestellt, die in einer erfindungsgemäßen Steuerungsvorrichtung als Steuerparameter-Eingangsschaltung, d.h. jeweils als SM-Nullagenmeldeschaltung 10 bzw. als Steuerschaltung 20 für Fischpositionssignale und/oder Maschinenbetriebssignale vorgesehen ist. Die Schaltung umfaßt am Eingang eine $\pi$-Schaltung ohmscher Widerstände R1, R2 und R3, auf die ein Eingangssignal E1 bzw. E2 gegeben ist. Zur Abblockung von Störungen ist zwischen Signalleitung s und Versorgungsspannungsleitung v eine Abbleiterdiode d1 geschaltet. Das Steuersignal wird über ein CMOS-Halbleiterbauelement, nämlich einen invertierenden Verstärker 55, auf einen mit der Spannung V1 = 5 V betriebenen Optokoppler 53 gegeben. Am Schaltungsausgang steht das Signal E1'bzw. E2 über einem Widerstand R4 an. Zur optischen Anzeige ist ein Anzeigeelement 36 in Form einer Leuchtdiode (LED) vorgesehen. Die Schaltung ist so bemessen, daß der für Fischsteuerwerte relevante Schaltpegel U > 10 V bei einem Strom von I > 6mA ist.

Nach Fig. 5 umfaßt ein Ausführungsbeispiel einer erfindungsgemäßen Eingangsimpuls-Steuerschaltung 30 eine ohmsche Widerstandsschaltung R5, R6 und R7 mit einer zu R5 parallel liegenden Diode d2 und einem zu R7 parallel liegenden Kondensator C1. Im übrigen entspricht der Schaltungsaufbau der Schaltung nach Fig. 4, wobei allerdings am Schaltungsausgang eine Impulsformerschaltung 54 vorgesehen ist. Die Schaltung 30 ist so dimensioniert, daß ein für den Fischweg relevanter Impuls einen Spannungspegel von U > 10 V aufweist und einem Strom von I > 3mA entspricht. Kurze Stör-oder Einzelimpulse, die keinem Fisch-Transportweg entsprechen, werden unterdrückt. Die Impulsformerschaltung 54 gibt beim Auftreten der Flanke eines Eingangssignals ein Ausgangssignal bestimmter Länge ab. Wenn das Ausgangssignal noch ansteht und eine weitere Signal-Eingangsflanke auftritt , ist diese wirkungslos.

In Fig. 6 ist eine erfindungsgemäße Fischmeßwert-Eingangsschaltung dargestellt. Einem Steuerkanal, z.B. E41, eines mehreren Kanälen entsprechenden Fischmeßwert-Bitmusters E4 ist am Eingang ein Diodenpaar d3, d4 mit einem in Reihe geschalteten Widerstand R8 zugeordnet, wobei das Signal auf einen invertierenden Verstärker 55 gegeben ist. Der Ausgangsteil der Schaltung mit Anzeigeelement 36, Optokoppler 53 und Widerstand R4 entspricht dem Aufbau der Schaltung nach Fig. 4. Allerdings ist das Element 36 über einen ohmschen Widerstand R9 mit der Diode d4 verbunden, wobei an R9 und das Element 36 die Spannung V2 = 5 V geschaltet ist. Die Schaltung ist so ausgelegt, daß ein für die Fischwertmessung relevantes Bitsignal eine Spannung U > 4 V aufweist, während nicht relevanten Signalen für eine Fischmessung eine Spannung von U < 0,5 V und ein Strom von I < 8mA zugeordnet ist.

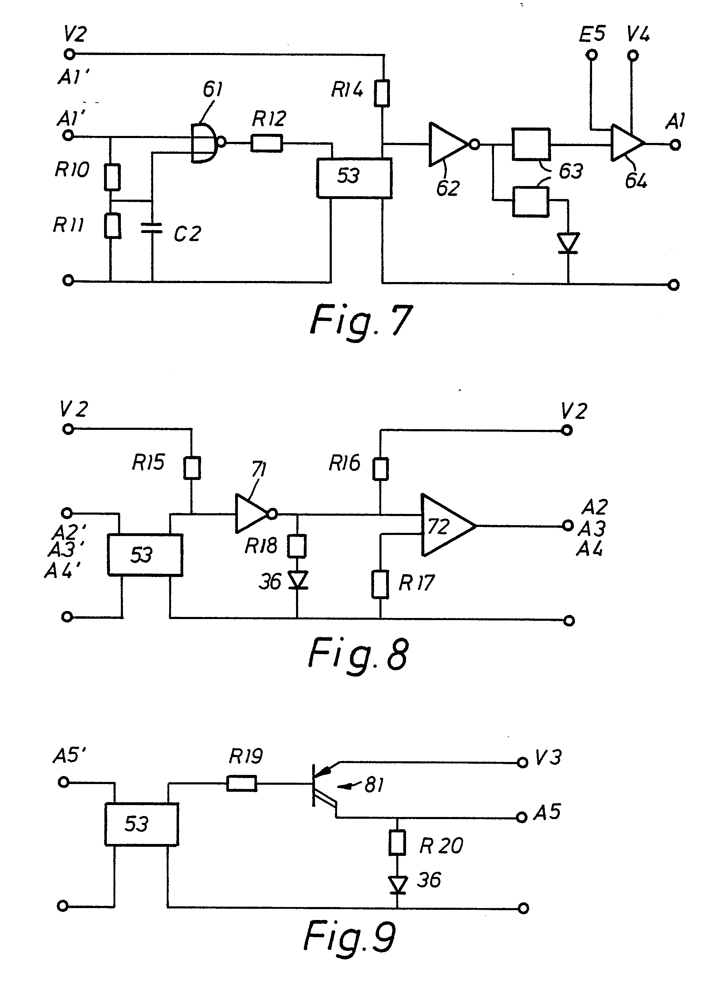

Eine SM-Stellimpulserzeugungsschaltung 6 nach Fig. 7 umfaßt im Eingangsbereich eine Kombination aus zwei Widerständen R10 und R11 sowie einen Kondensator C2 derart, daß ein Steuerimpulssignal A1'ein invertierendes Exklusiv-OR-Gatter 61 ansteuert. Der Ausgang des Gatters ist über einen ohmschen Widerstand R12 mit einem Optokoppler 53 verbunden. Zur Aufbereitung eines entkoppelten Signals ist eine Schmitt-Trigger-Schaltung 62, d.h. eine invertierende Treiberstufe, vorgesehen, deren Ausgang mit einer Zeitstufe 63 verbunden ist. Der Zeitstufe 63 ist eine Gegentaktendstufe 64 nachgeschaltet, die ein Stellimpulssignal A1 einem zugeordneten Schrittmotor zuführt. Zur Anzeige einer Impulsfolge ist ein Anzeigeelement 36 vorgesehen. Die Schaltung sorgt dafür, daß bei jedem am Eingang auftretenden Signalwechsel am Ausgang ein Stellimpuls abgegeben wird. Dieser hat eine für einen Schrittmotorstellantrieb erforderliche Länge. Jeder Stellimpuls weist eine Höhe von 24 Volt auf. Der Ausgang der Gegentaktendstufe ist niederohmig mit einem zugeordneten SM-Leistungsteil verbunden. Bei Beaufschlagung der Gegentaktendstufe 64 mit einem geeigneten Steuersignal E5 wechselt der 24 V-Signalpegel auf einen Null-Volt-Pegel, so daß die Schaltstufen der Gegentaktendstufe 64 blockiert sind, also keine Stellimpulse an SM-Leistungsteile gegeben werden. Über einen ohmschen Widerstand R14 sind der Ausgang des Optokopplers 53 und der Eingang der Treiberstufe 62 mit der Spannung V2 = 5 V versorgt.

Eine SM-Steuerungsschaltung 7 gemäß Fig. 8, die jeweils zum Hervorbringen eines SM-Entregungssignals A2, eines SM-Drehrichtungssignals A3 oder eines SM-Zurücksetz-Signals A4 geeignet ist, umfaßt eingangsseitig einen mit einem Signal A2', A3'bzw. A4'angesteuerten Optokoppler 53, dessen Ausgang mit einer invertierenden Verstärkerschaltung 71 verbunden ist, die ausgangsseitig an den Eingang einer Gegentaktendstufe 72 angeschlossen ist. Ein Eingang der Gegentaktschaltung ist mit einem ohmsche Widerstände R16 und R17 umfassenden Spannungs teiler verbunden, der zwischen dem Nullpotential und der Spannungsversorgung V2 = 5 V liegt. Der Optokoppler wird über einen Widerstand R15 ebenfalls mit der Spannung V2 versorgt. Am Ausgang des Verstärkers 71 ist ein über einen Widerstand R18 an den Null-Volt-Pegel geschaltetes Anzeigeelement 36 vorgesehen. Die Schaltung ist so ausgelegt, daß nur Signalpegel mit U > 8 V von der Gegentaktendstufe 72 verarbeitet und störsicher, d.h. niederohmig, an ein zugeordnetes Schrittmotor-Stellwerk gegeben werden.

Eine nach Fig. 9 zur Steuerung des Fischtransports oder eines Werkzeugantriebs geeignete Schaltung 8 zur Abgabe eines Fischtransport-Signals oder Messermotor-Signals A5 weist eine Ausgangsstufe auf, in der über einen ohmschen Widerstand R19 ein Darlington-Transistor 81 als elektronischer Schalter angesteuert wird, wobei ein Steuersignal A5' über einen galvanisch trennenden Optokoppler 53, dem Eingang der Schaltung zugeführt ist. Eine optische Signalanzeige erfolgt mittels einer Leuchtdiode (LED) als Anzeigeelement 36, die über einen Widerstand R20 zwischen Ausgangsleitung und Null-Volt-Pegel geschaltet ist. Das Ausgangsteil A5 weist einen Spannungspegel von 24 Volt auf und läßt einen Strom zu, mit dem ein Stellglied, insbesondere ein Relais, steuerbar ist. Der Darlington-Transistor 81 der Ausgangsstufe ist an die Spannung V3 = 24 V geschaltet.

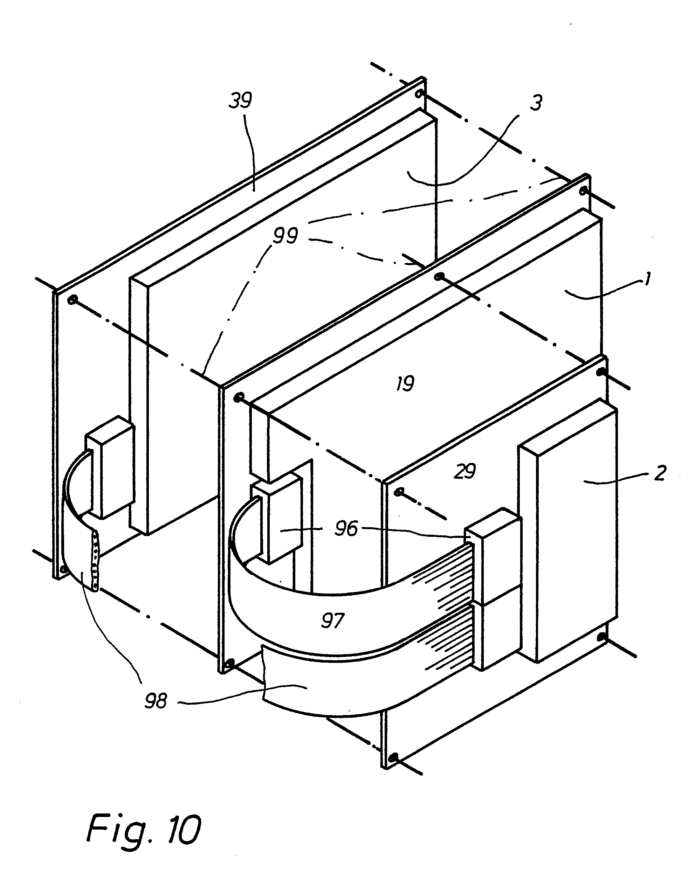

Aus Fig. 10 erkennt man den Aufbau einer eine kompakte Konstruktionseinheit bildenden elektronischen Steuerungsvorrichtung. Sie umfaßt drei Halteplatten oder Platinen 19, 29 und 39, die mit ihren Flächen parallel zueinanderliegend im Stapel angeordnet sind. Eine erste Platine 29 trägt die Vorrichtungs-Baueinheit 2, die zweite oder mittlere Platine 19 die erste Vorrichtungs-Baueinheit 1 und die dritte Platine 39 die Vorrichtungs-Baueinheit 3. Jede Baueinheit 1, 2 bzw. 3 ist gegenüber der oder den benachbarten Baueinheit(en) durch die dazwischen liegende Platine getrennt. Mit nicht näher dargestellten mechanischen Verbindungsmitteln 99 läßt sich im ganzen eine sehr kompakte, kleinbauende und stabile Einheit ausbilden, wobei der Raum zwischen den Platinen praktisch von einer Baueinheit eingenommen und durch deren Abmaße bestimmt ist.

Elektrische Verbindungen zwischen den Baueinheiten 1 und 2 bzw. 2 und 3 erfolgen über Flachkabel 97, 98, die mittels Steckelementen 96 lösbar an die Baueinheiten angeschlossen sind. Man erkennt, daß eine leicht montierbare, insbesondere in Modulbauweise zusammensetzbare, Gesamt-Funktionseinheit geschaffen ist, die innerhalb einer gesteuerten Fischmaschine angeordnet werden kann. Infolge der spezifischen, den einzelnen Baueinheiten zugeordneten elektrischen Funktionen und der beschriebenen räumlichen Zuordnung bzw. Reihenfolge der einzelnen Bauelemente ist erreicht, daß innerhalb der Konstruktionseinheit unerwünschte Rückwirkungen vermieden sind. Die Platinen-Stapelbauweise sorgt für Trennung und Abschirmung von bzw. gegenüber elektromagnetischen Feldern.

**Bezugszeichenliste**

1 CPU-Baueinheit (Rechner), erste Baueinheit der Steuerungsvorrichtung

2 zweite Baueinheit der Steuerungsvorrichtung

21 Signalverstärker

22 Anpassungsschaltung

3 Peripherieschaltung, dritte Baueinheit der Steuerungsvorrichtung

31 Eingangsteil von 3

32 Ausgangsteil von 3

33 Steuereinheit der Peripherieschaltung 3

34 Speichereinrichtung für Prüfprogramme

35 Vorwahl-/Stellungsschaltereinheit

36 optisches Anzeigeelement (LED)

37 mehrstellige Segmentanzeige

10 SM-Nullagen-Eingangsschaltung (SteuerparameterEingangsschaltung)

20 Steuerparameter-Eingangsschaltung

30 Eingangsimpuls-Erzeugungsschaltung

40 Fischmeßwert-Eingangsschaltung

41 Speicher-und Verknüpfungsbauelement

42 Speicher-und Verknüpfungsbauelement

43 Speicher-und Verknüfungsbauelement

44 Speicher-und Verknüpfungsbauelement

51 Stabilisierungs-und Unterdrückungsschaltungseinheit

52 Stabilisierungs-und Unterdrückungsschaltungseinheit

53 Glied zur galvanischen Entkopplung (Optokoppler)

54 Impulsformerschaltung

6 Schrittmotor-Stellimpulsschaltung

61 Exklusiv-NOR-Gatter

62 Inverter

63 Zeitstufe

64 Gegentaktendstufe

7 SM-Steuerschaltung

71 Signalaufbereitungsschaltung

72 Gegentaktendstufe

8 Fischtransport-und Werkzeugantriebssteuerung

81 Ausgangsstufe

9 Fischgrößenanzeigeschaltung

91 Register

92 Dekodierstufe

19 Platinen, Halteplatten

29 Platinen, Halteplatten

39 Platinen, Halteplatten

96 Steckerelemente

97 elektrische Verbindungsmittel

98 elektrische Verbindungsmittel

99 mechanische Verbindungsmittel

100 SM-Nullagenmeldeschalter, Signalgeber für Werkzeug-Betriebszustände

200 Signalgeber für Maschinen-Betriebszustände sowie Fischposition in der Maschine

201 Muldentaktschalter

202 Fischposition abrufende Schalter

203 Freigabe-oder Startsignalschalter

300 Signalgeber für fischweg-und maschinengebundene Werte

400 Signalgeber für Fischdicke (Winkelkodierer)

600 Schrittmotorleistungsteil für Stellimpulse

700 Schrittmotorleistungsteil für Drehrichtungs-, Setzimpuls-und Entregungssignale

800 Relais für Fischtransportsteuerung

E1 SM-Nullagenüberwachungssignale

E2 Steuerparametersignale, nämlich Auslösesignal eines Muldentaktschalters, Abfragesignal eines eine bestimmmte Fischposition abrufenden Schalters, Freigabe-oder Startsignal, Maschinentyp-Kontroll-und Betriebssignale

E3 transportsychrone Impulssignale

E4 Fischmeßwert-Signale

E41 Fischmeßwert-Signal

E42 Fischmeßwert-Signal

E5 Steuersignal für Schaltung 6

A1 SM-Stellimpulssignale

A2 SM-Entregungssignale

A3 SM-Drehrichtungssignale

A4 SM-Zurücksetz-Signal

A5 Maschinenbetrieb-Steuersignale

A51 Messermotor-Signal

A52 Fischtransport-Signal

A6 Fischgrößen-Anzeigesignale

A Adressleitungen

D Datenleitungen

S Steuerleitungen

T Taktleitungen

B1 Datenbusleitung

B2 Datenbusleitung

B3 Datenbusleitung

D1 paralleler Datenbus

**Ansprüche**

1. Elektronische Steuerungsvorrichtung zum Steuern von Stellgliedern für den zeitlichen Einsatz und die Steuerwege von längs eines Fischförderweges einer Fischbearbeitungsmaschine angeordneten Werkzeugen und Führungen mit einem programmierbaren, Fischart-und Maschinendaten speichernden zentralen Rechner (CPU) sowie mit Speicher-, Verknüpfungs-und Steuermitteln für Fischmeßwertdaten, Eingangs-und Ausgangssteuerdaten, **dadurch gekennzeichnet,** daß die Vorrichtung eine erste, den zentralen Rechner bildende Baueinheit (1), eine mit dieser verbundene, Signalverstärker (21) und Anpassungsmittel (22) umfassende zweite Baueinheit (2) sowie eine als Peripherieschaltung für den zentralen Rechner ausgebildete dritte Baueinheit (3) umfaßt, die eine die Speicher-, Verknüpfungs-und Steuermittel gemeinsam bildende, mit der zweiten Baueinheit verbundene Steuereinheit (33) sowie, jeweils mit letzterer verbunden und zur Signalentkopplung, -entstörung und -aufbereitung vorgesehen, einen Eingangsteil (31) und einen Ausgangsteil (32) umfaßt.

2. Vorrichtung nach Anspruch 1, **dadurch gekennzeichnet,** daß der Eingangsteil (31) und der Ausgangsteil (32) optische Anzeigelemente (36), vorzugsweise Leuchtdioden, für alle die Fischmeßwertdaten sowie Eingangs-und Ausgangssteuerdaten repräsentierenden Signale (E1, E2, E3, E4, A1, A2, A3, A4, A5) umfassen.

3. Vorrichtung nach Anspruch 1 oder 2, **dadurch gekennzeichnet,** daß der Ausgangsteil (32) eine Fischgrößenanzeigeschaltung (9) mit einem Register (91), einer Dekodierstufe (92) und einer mehrstelligen Segmentanzeige (37) für die Fischgröße umfaßt.

4. Vorrichtung nach einem der Ansprüche 1 bis 3, **dadurch gekennzeichnet,** daß die Eingangs-und Ausgangsteile (31, 32) Glieder (53) zur galvanischen Entkopplung, insbesondere Optokoppler, umfassen.

5. Vorrichtung nach einem der Ansprüche 1 bis 4, **dadurch gekennzeichnet,** daß der Eingangsteil (31) Eingangsschaltungen (51, 52) zur Unterdrückung von Störungen sowie zur Stabilisierung von Eingangssignalen (E1, E2, E3, E4) umfaßt.

6. Vorrichtung nach einem der Ansprüche 1 bis 5, **dadurch gekennzeichnet,** daß der Eingangsteil (31) eine Fischweg-Eingangsimpulsschaltung (30) umfaßt, die eine Signalaufbereitungs-und Impulsformerschaltung (54) umfaßt.

7. Vorrichtung nach einem der Ansprüche 1 bis 6, **dadurch gekennzeichnet,** daß der Ausgangsteil (32) zur Abgabe von Schrittmotor-Stellimpulssignalen (A1) eine Schrittmotor-Stellimpulsschaltung (6) aufweist, die ein Eingangsgatter, insbesondere ein invertierendes Exklusiv-OR-Gatter (61), einen Inverter (62), eine Zeitstufe (63) sowie eine Gegentaktendstufe (64) umfaßt.

8. Vorrichtung nach einem der Ansprüche 1 bis 7, **dadurch gekennzeichnet,** daß der Ausgangsteil (32) zur Abgabe eines Entregungssignals (A2), eines Drehrichtungssignals (A3) sowie eines Rücksetz-Signals (A4) für einen Schrittmotor eine Schaltung (7) aufweist, die jeweils eine Signalaufbereitungsschaltung (71) sowie eine Gegentaktendstufe (72) umfaßt.

9. Vorrichtung nach Anspruch 7 oder 8, **dadurch gekennzeichnet,** daß eine Gegentaktendstufe (64, 72) thermische Überwachungsmittel umfaßt.

10. Vorrichtung nach einem der Ansprüche 1 bis 9, **dadurch gekennzeichnet,** daß der Ausgangsteil (32) eine Fischtransport-und Werkzeugantriebssteuerung (8) mit einer Ausgangsstufe (81) umfaßt.

11. Vorrichtung nach Anspruch 10, **dadurch gekennzeichnet,** daß die Ausgangsstufe (81) eine Strombegrenzungsschaltung umfaßt.

12. Vorrichtung nach einem der Ansprüche 1 bis 11, **dadurch gekennzeichnet,** daß zu ihrer Versorgung Schaltungen (VE1, VE2, VE3, VE4) zum Hervorbringen von vier getrennten Versorgungsspannungen (V1, V2, V3, V4) vorgesehen sind.

13. Vorrichtung nach einem der Ansprüche 1 bis 12, **dadurch gekennzeichnet,** daß die Steuereinheit (33) mit einer Vorwahl-/Stellungsschaltereinheit (35) verbunden ist.

14. Vorrichtung nach einem der Ansprüche 1 bis 13, **dadurch gekennzeichnet,** daß die Steuereinheit (33) vier Speicher-und Verknüpfungsbauelemente (41, 42, 43, 44) umfaßt, wobei das erste Element (41) mit einem Eingang für vorrangige Bearbeitung versehen ist und Schrittmotor-Drehrichtungs-, Entregungs-und Zurücksetzsignalen (A2, A3 bzw. A4) entsprechende Steuersignale speichert und hervorbringt, das zweite Element (42) serielle Anzeigedaten sowie Messermotor-und Fischtransportsignalen (A6, A5) entsprechende Steuersignale speichert und hervorbringt, das dritte Element (43) Impulsfolgewerte für einen Schrittmotor speichert und hervorbringt und das vierte Element (44) zur Abfrage und Ansteuerung einer Vorwahl-/und Stellungsschaltereinheit (35) vorgesehen ist.

15. Vorrichtung nach einem der Ansprüche 1 bis 14, **dadurch gekennzeichnet,** daß die Peripherieschaltung (3) eine zwischen die Steuereinheit (33) und die Anpassungsmittel (22) geschaltete, Prüfprogramme speichernde Speichereinrichtung (34) umfaßt.

16. Vorrichtung nach einem der Ansprüche 1 bis 15, **dadurch gekennzeichnet,** daß sie als Konstruktionseinheit zum Einsetzen und/oder Anschluß an eine Fischbearbeitungsmaschine mit drei elektrisch und mechanisch verbundenen Platinen ausgebildet ist, wobei eine erste Platine die zweite Baueinheit (2), eine zweite Platine die erste Baueinheit (1) und eine dritte Platine die dritte Baueinheit (3) trägt und die Platinen in dieser Reihenfolge miteinander verbunden, insbesondere im Stapel angeordnet sind.

Fig.1

Fig. 2

0 259 560

Fig 3a

Fig.3b

Fig.3c

Fig.3d

Fig.3e

Fig.3f

Fig.3g

Fig.3h

Fig.3i

Fig.3j

Fig.3k

Fig.3l

Fig.3m

Fig.3n

Fig.3o

Fig. 4

Fig. 5

Fig. 6

Fig. 7

Fig. 8

Fig. 9

Fig. 10